Europäisches Patentamt

European Patent Office

Office européen des brevets

(11) Publication number: **0 534 282 A1**

## EUROPEAN PATENT APPLICATION

(21) Application number: **92115750.9**

(22) Date of filing: **15.09.92**

(51) Int. Cl.⁵: **H04N 7/13**

(30) Priority: **23.09.91 FI 914453**

(43) Date of publication of application:
**31.03.93 Bulletin 93/13**

(84) Designated Contracting States:
**DE ES FR GB IT NL SE**

(71) Applicant: **OY NOKIA AB**
**Heikkiläntie 7**
**SF-00210 Helsinki(FI)**

(72) Inventor: **Haikonen, Pentti**
**Ruutikatu 10 B 39**
**SF-02600 Espoo(FI)**

(74) Representative: **Körber, Wolfhart, Dr. Dipl.-Ing.**
**et al**
**Patentanwälte Mitscherlich & Partner**
**Steinsdorfstrasse 10**
**W-8000 München 22 (DE)**

(54) **A method for compressing a digitally coded video image.**

(57) The invention relates to a method for compressing a digitally coded video image in connection with transmission. In the method, image information is transmitted as successive image blocks (PM) each comprising n x m pixels, and the image block (P1) to be transmitted is compared with at least one previously transmitted image area of equal size to determine the correspondence therebetween. In order to be able to utilize the fine structure recurring within the image or areas having a substantially constant intensity value in the compression, the image block (P1) is compared with an image area contained in the same field, and (i) if at least one image area meeting a predetermined correspondence condition is found, one of said image areas is selected as a prediction block for the image block to be transmitted, and (ii) if the predetermined correspondence condition is met by none of the image areas under comparison, an image block in which the intensity value of each pixel is zero is taken as a prediction block, and a difference image is calculated from the image block to be transmitted and the prediction block, and the difference image and position data concerning the prediction block are transmitted to a receiver, the position data comprising a predetermined code word in case (ii).

FIG. 1

The invention relates to a method for compressing a digitally coded video image in connection with the transmission. In the method, image information is coded as successive image blocks each comprising n x m pixels, and the image block to be transmitted is compared with at least one previously transmitted image area of equal size to determine the correspondence therebetween.

The invention also relates to a method according to the preamble of the attached claim 6 for receiving a compressed video image.

In many conventional image compression methods, the image is transmitted as successive blocks each comprising n x m pixels. To code a moving image, coding between fields is commonly used, the block to be transmitted being predicted by the corresponding block in a preceding field. In so-called motion compensation methods, not only the fully corresponding positions but also other positions in the neighbouring fields can be searched for the prediction block.

A disadvantage of the prior art methods is, however, that they are not able to utilize the internal redundance of the image, that is, to utilize the fact that the images usually comprise wide areas where the intensity value is substantially constant, or where recurring fine structure occurs.

The object of the present invention is to eliminate the above-mentioned disadvantage and to provide a method for compressing a digitally coded video signal in which the internal redundance of the image can be utilized, and so further reduce the number of bits required to transmit image information. This object is achieved by means of a method according to the invention to be applied in connection with the transmission, which method is characterized in that the image block is compared with an image area contained in the same field, and (i) if at least one image area meeting a predetermined correspondence condition is found, one of said image areas is selected as a prediction block for the image block to be transmitted, and (ii) if the predetermined correspondence condition is met by none of the image areas under comparison, an image block in which the intensity value of each Pixel is zero is taken as the prediction block, and that a difference image is calculated from the image block to be transmitted and the prediction block, and the difference image and position data concerning the prediction block are transmitted to a receiver, the position data comprising a predetermined code word in case (ii). A method for receiving a video image compressed as described above, in turn, is characterized by what is disclosed in the characterizing portion of the attached claim 6. It is to be mentioned that as used herein the field refers to a single field in the case of an interlaced video signal and to a single image in the case of a non-interlaced video signal.

The basic idea of the invention is that the previously transmitted area of the same field is searched for an image block equal in size to the image block to be transmitted and corresponding to the image block to be transmitted as closely as possible, and whenever such an image block is found for the image block to be transmitted, information about the position of the block is transmitted to the receiver as well as a difference image calculated pixel by pixel as the difference between the intensity values of the image block to be transmitted and the found image block, called a prediction block. As the prediction block approximately corresponds to the image block to be transmitted, the difference image contains only a little information, and so it can be transmitted to the receiver by using a considerably smaller number of bits than that of the original image block to be transmitted. The position of the prediction block can be indicated to the receiver by using a very small number of bits, so that it does not affect the end result. It is further to be mentioned that as used herein the term intensity value may refer to either grey or colour intensity values.

The technique according to the invention thus enables the utilization of the internal recurring fine structure of the image or areas having a substantially constant intensity value. The invention thus offers an efficient compression method for e.g. the intra-images of certain known compressing algorithms.

Any previously transmitted area of the same field can be searched for the prediction block. The apparatus, however, can be realized more simply in cases where fixed division into blocks is used so that the blocks have fixed positions.

According to another preferred embodiment of the invention, the performance of the method can be further improved so that the image block to be transmitted next is also compared with a converted image block obtained from said image area by a conversion operation, and that when such a converted image block is selected as a prediction block, the receiver is further informed of the applied conversion operation.

In the following the invention will be described more closely with reference to the example shown in the attached drawings, in which

Figure 1 shows an image block of n x m pixels which is to be transmitted, and three previously transmitted neighbouring image blocks, and

Figure 2 is a block diagram illustrating a coder in which the method according to the invention is applied.

The image blocks to be transmitted by the method according to the invention comprise n x m pixels $P_{i,j}$ having the following positions within the image block:

$$P_{1,1} \quad P_{1,2} \quad P_{1,3} \cdots\cdots P_{1,m}$$

$$P_{2,1} \quad P_{2,2} \quad P_{2,3} \cdots\cdots P_{2,m}$$

$$\cdot$$
$$\cdot$$
$$\cdot$$

$$P_{n,1} \quad P_{n,2} \quad P_{n,3} \cdots\cdots P_{n,m}$$

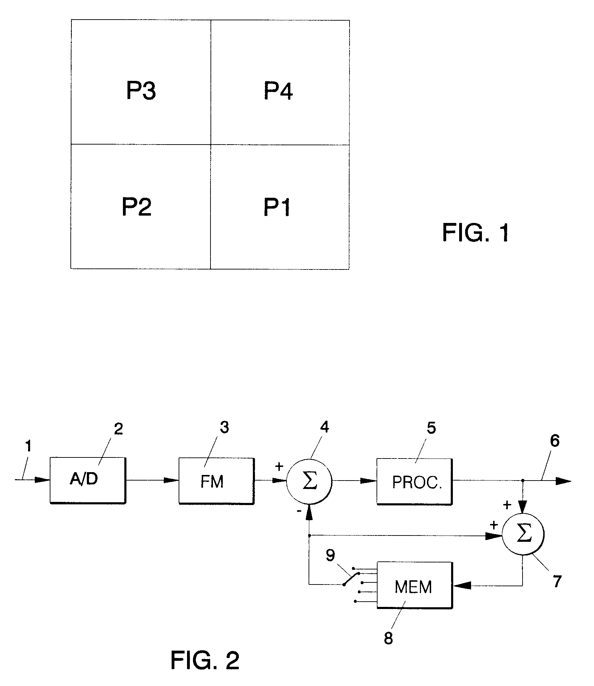

The image block to be transmitted next is indicated by the reference P1, the respective pixels being $P1_{i,j}$. Besides the block P1 to be transmitted Figure 1 shows its three previously transmitted neighbouring image blocks P2, P3 and P4, of which the receiver has already been informed, when the image is being transmitted from the left to the right and from the top to the bottom.

According to the invention, the blocks P2, P3 and P4 are proved one after another as the prediction block of the image block P1 to be transmitted. The image block that corresponds closest to the image block P1 to be transmitted is selected as the prediction block, provided that this image block meets the correspondence criterion to be described below. The correspondence can be determined e.g. by calculating the sum E of the absolute differences (the absolute values of the differences) between the intensity values (grey or colour intensity values) of the corresponding pixels of the image block to be transmitted and the image block suggested as the prediction block in the following way:

$$(1) \quad E = \sum_{i,j}^{n,m} abs\ \{P1_{i,j} - PN_{i,j}\}, \quad \text{condition: } E < \delta$$

where the index N is 2, 3 or 4.

If the sum E is smaller than a predetermined set value $\delta$, it indicates that the blocks correspond to each other. The image block P2, P3 or P4 giving the smallest sum E smaller than the predetermined set value $\delta$ is selected as the prediction block. The receiver is then informed of the position of the selected prediction block and of the differences calculated pixel by pixel between the intensity values of the image block to be transmitted and the prediction block. At the reception the prediction block can be found on the basis of the received position data, and the image block to be received is reconstructed by summing the intensity values of the prediction block and the received differences of the intensity values pixel by pixel.

However, if none of the image blocks P2, P3 or P4 meets the condition of Formula (1), an image block P0 in which the intensity value of each pixel $P0_{i,j}$ is zero is taken as a prediction block. This also has to be done for the first image block of each field as the previously transmitted image area does not exist in the same field when the first image blocks are transmitted. In this case, the position data of the prediction block to be transmitted to the receiver comprises a predetermined code word which indicates that the intensity value of each pixel in the image block selected as the prediction block is zero, as a result of which the receiver is able to select the corresponding block as the prediction block.

In principle, the previously transmitted area of the same field can always be searched for the prediction block, so that the searching area within the field grows as the transmission proceeds. To prevent the retarding of the method, it is, however, advantageous to confine the search within a certain area, e.g. as illustrated in the example below, in which the blocks to be compared are searched within an area which is defined by the neighbouring image blocks of the image block to be transmitted on top of it and on its left side when the image is transmitted from the left to the right and from the top to the bottom.

In the basic form of the method according to the invention the prediction value of the pixel $P_{i,j}$ to be transmitted will be the corresponding pixel $PN_{i,j}$ of the prediction block, as described above. However, it can be seen from Figure 1 that when PN is P2, the horizontal distance between the pixel to be predicted and the predicted pixel is m pixels, and when PN is P4, the vertical distance between the pixel to be predicted and the predicted pixel is n pixels. In practice, however, it would be preferable that the pixel to be predicted and the predicted pixel were as close to each other as possible, in which case the maximum correlation between them would most probably be obtained. Accordingly, for example, the vertical pixel column $P2_{i,m}$ of the block P2 would be a good prediction column for the column $P1_{i,l}$ of the block P1. In some cases it is thus possible to obtain a better prediction value from the image block P2 by turning it about its vertical central axis into its mirror image. Correspondingly, the prediction value of the image block P4 may sometimes increase when it is turned about its horizontal central axis into its mirror image, even though the distance between part of the pixels thereby increases. The above-mentioned turnings can be realized by applying the permutation of the pixels to the blocks P2 and P4 in the following way.

The permutated versions of the image blocks P2 and P4 are indicated by the references T2 and T4, respectively, and their pixels are indicated by the references $T2_{i,j}$ and $T4_{i,j}$, respectively. It thereby applies for the pixels

(2)     $T2_{i,j} = P2_{i,m+1-j}$

(3     $T4_{i,j} = P4_{n+1-i,j}$.

In the preferred embodiment of the method according to the invention, it is first examined, as described above, whether the image blocks P2, P3 and P4 can be used as prediction blocks. The image blocks P2 and P4 are then subjected to the above-described permutation operation, and the usability of the permutated blocks T2 and T4 as a prediction block is examined. The best one of these five alternatives is selected as the prediction block. When the converted image block T2 or T4 is selected as the prediction block, the receiver is also informed of the applied conversion operation. In the reception the corresponding conversion operation is then performed on the image block found on the basis of the position data, whereafter the image block so obtained is summed pixel by pixel with the received intensity value differences.

However, if none of the alternatives meets the condition of Formula (1), an image block PO in which the intensity value of each pixel $P0_{i,j}$ is zero is again taken as a prediction block, and the receiver is not only informed of the difference image but the position data comprising a predetermined code word indicative of the selected image block is also transmitted to it.

The performance of both the basic form of the method and the above-described preferred embodiment can be further improved by scaling the intensity values of the pixels of the image block selected as the prediction block so that they correspond even more closely to the intensity values of the pixels of the image block to be transmitted. After scaling the sum E according to Formula (1) is thus smaller than previously. The receiver is informed of the applied scaling operation, and the corresponding scaling operation is then performed on the image block found on the basis of the received position data. The image block so obtained is then summed pixel by pixel with the received intensity value differences.

Figure 2 is a block diagram illustrating a coder in which the above-described method is described. The coder comprises an A/D converter 2 in which an incoming video signal is converted into digital form. The digital signal is then stored field by field in a field memory 3 connected after the A/D converter. In addition, the coder comprises a processor 5, a memory 8, summing circuits 4 and 7, and a switch 9 in the output of the memory 8. The output of the field memory 3 and an output in the memory 8 selected by the switch 9 are connected to inputs in the summing circuit 4, and the output of the summing circuit 4 is connected to the input of the processor 5. The output of the processor is connected both to the line through possible additional coding stages (not shown in the figure) and to a first input of the summing circuit 7. The output of the memory 8 selected by the switch 9 is connected to a second input in the summing circuit 7. The output of the summing circuit 7, in turn, is connected to the input of the memory 8.

A video signal 1 is applied to the A/D converter 2 and further to the field memory 3. The summing circuit 4 calculates, according to Formula (1), the sum of the absolute values of the differences between the intensity values of the pixels of the image block to be transmitted and those of the image block suggested as a prediction block. The obtained sum is applied to the processor 5. If this sum is smaller than a set reference value $\delta$, the processor accepts the suggested image block as one possible prediction block. All image blocks among which the prediction block is to be found are examined in this manner. As described above, the block giving the smallest sum according to Formula (1) amongst the blocks meeting the set condition is selected as the prediction block. If no acceptable image block is found, the processor assumes that the intensity value of each pixel of the prediction block is zero. The processor 5 controls the switch 9 in the output of the memory 8, which switch selects the image blocks to be suggested as the prediction blocks within the previously transmitted image area of the same field. The switch may also be realized by software. Alternatively, the processor 5 may process all the blocks suggested as the prediction block parallelly. The previously transmitted image area of the same field is stored in the memory 8, the contents of which are continuously completed as the transmission proceeds so that the processor 5 gives the differences between the intensity values of the pixels of the image block to be transmitted and those of the image block selected as the prediction block, and these differences are summed in the summing circuit 7 with the intensity values of the pixels of the selected prediction block, and the obtained actual intensity values of the image block to be transmitted are stored in the memory 8. Data 6 from the processor 5 also contains information about the position of the prediction block. The data 6 is applied to the line through possible additional coding stages.

The structure of the decoder used in the reception is similar to that of the coder.

Even though the invention has been described above with reference to the example of the drawings, it is obvious that the invention is not restricted to it, but it can be modified in various ways within the inventive idea defined above and in the attached claims. For example, the correspondence between the image blocks may be determined in many different ways. In place of the sum of the absolute differences, it is possible to calculate e.g. the sum of squared differences.

**Claims**

1. A method for compressing a digitally coded video image in connection with transmission, wherein image information is coded as successive image blocks (PN) each comprising n x m pixels, and the image block (P1) to be transmitted is compared with at least one previously transmitted image area of equal size to determine the correspondence therebetween, **characterized** in that the image block (P1) is compared with an image area contained in the same field, and
   - (i) if at least one image area meeting a predetermined correspondence condition is found, one of said image areas is selected as a prediction block for the image block to be transmitted, and (ii) if the predetermined correspondence condition is met by none of the image areas under comparison, an image block in which the intensity value of each pixel is zero is taken as the prediction block, and that
   - a difference image is calculated from the image block to be transmitted and the prediction block, and the difference image and position data concerning the prediction block are transmitted to a receiver, the position data comprising a predetermined code word in case (ii).

2. A method according to claim 1, **characterized** in that the image areas are selected from among the previously transmitted image blocks (P2-P4) within the same field.

3. A method according to claim 1, **characterized** in that the image areas are selected slideably within the previously transmitted area of the same field.

4. A method according to claim 2 or 3, **characterized** in that the image areas are selected within an area defined by the neighbouring image blocks (P2-P4) of the image block (P1) to be transmitted on top of it and on its left side when the image is being transmitted from the left to the right and from the top to the bottom.

5. A method according to claim 1**, characterized** in that the image block to be transmitted is also compared with an image block (T2; T4) derived from said image area (P2; P4) by a conversion operation, and that when such a converted image block (T2; T4) is selected as the prediction block, the receiver is also informed of the applied conversion operation.

6. A method for receiving a video image compressed as described in claim 1, wherein image information is received as successive image blocks (PM) each comprising n x m pixels, and the image to be received is reconstructed in a memory (8) of the receiver as the reception proceeds, **characterized** in that the receiver searches the memory (8) for each particular prediction block on the basis of the received position data, and if the position data comprises a predetermined code word, the receiver takes a block in which the intensity value of each pixel is zero as the prediction block, and that the receiver reconstructs the image block to be received by summing together the intensity values of the prediction block and the received difference image pixel by pixel.

**7.** A method according to claim 6, **characterized** in that it comprises reception of information about a conversion operation by means of which the prediction block (T2; T4) has been derived from the original image block (P2; P4) in connection with the transmission, and that the prediction block found on the basis of the position data is subjected to a corresponding conversion operation prior to said summing.

| P3 | P4 |
|----|----|
| P2 | P1 |

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PROCEEDINGS OF THE NATIONAL COMMUNICATIONS FORUM vol. 42, no. 2, 30 September 1988, OAK BROOK, ILLINOIS US pages 1678 - 1682 H.GHARAVI 'Low bit rate television on ISDN' | 1-4,6 | H04N7/13 |
| A | * abstract; figure 1; table 1 * * Sections:'Block Classification', 'Interframe Prediction' and 'Intraframe Prediction' on pages 1678-1679 * | 5,7 | |
| X | IEEE TRANSACTIONS ON COMMUNICATIONS vol. 30, no. 3, March 1982, NEW YORK US pages 541 - 549 A.PLOYSONGSANG ET AL. 'DCT/DPCM processing of NTSC composite video signal' * abstract; figures 1,5 * * Section:' Block Processing' on pages 543-544 * | 1-4,6 | |
| A | ELECTRONICS & COMMUNICATIONS IN JAPAN, PART I - COMMUNICATIONS vol. 72, no. 9, September 1989, NEW YORK US pages 35 - 44 H.WATANABE ET AL. '64Kbit/s Video Coding Equipment Using Adaptive Tree-search Vector Quantization' * abstract; figures 1,3,6 * * Section 3.3:'Mean Separation and Normalization' on pages 38-39 * | 1,6 | **TECHNICAL FIELDS SEARCHED (Int. Cl.5 )**<br><br>H04N |

-/--

The present search report has been drawn up for all claims

| Place of search | Date of completion of the search | Examiner |
|---|---|---|
| THE HAGUE | 16 DECEMBER 1992 | GIANNOTTI P. |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | ICASSP 89 INTERNATIONAL CONFERENCE ON ACOUSTICS, SPEECH AND SIGNAL PROCESSING, GLASGOW; 23 May 1989, IEEE,NEW YORK, US; pages 1671 - 1674 T.SAITO ET AL. 'SELF-ORGANIZING PATTERN-MATCHING CODING FOR PICTURE SIGNALS' * abstract; figures 1,2 * * page 1672, left column, line 13 - right column, line 6 * | 1,6 | |
| A | IEEE/IEICE GLOBAL TELECOMMUNICATIONS CONFERENCE 1987, TOKYO, JP; vol. 1/3, 15 November 1987, IEEE, NEW YORK, US; pages 50 - 54 H.WATANABE ET AL. 'A 64Kb/s Video Coding Equipment' * Section 2.1:'Motion Compensated interframe Prediction' on pages 50-51 * | 1,6 | |
| A | ELECTRONICS & COMMUNICATIONS IN JAPAN, PART I - COMMUNICATIONS vol. 69, no. 3, March 1986, NEW YORK US pages 93 - 101 T.MURAKAMI ET AL. 'Dynamic Multistage Vector Quantization of Images' * abstract * * page 96, left column, line 10 - line 18; figure 4 * | 1,6 | TECHNICAL FIELDS SEARCHED (Int. Cl.5) |
| A | CCITT FASCICULE III.6, RECCOMANDATION H261; 1988, CCITT, GENEVA, CH; pages 120 - 128 SPECIALIST GROUP ON CODING FOR VISUAL TELEPHONY 'Codec for Audiovisual Services at n x 384Kbit/s' | | |

-----

The present search report has been drawn up for all claims

| Place of search | Date of completion of the search | Examiner |
|---|---|---|
| THE HAGUE | 16 DECEMBER 1992 | GIANNOTTI P. |

EPO FORM 1503 03.82 (P0401)